# EUROPEAN PATENT SPECIFICATION

(11) **EP 4 197 715 B1**
(45) Date of publication and mention of the grant of the patent: **06.11.2024**
(21) Application number: 22215035.1
(22) Date of filing: 20.12.2022
(51) Int. Cl.: B25J 15/00, B25J 9/12, B25J 18/02, B26D 7/26, B25J 9/10

(54) **EXTENSIBLE GRIPPING DEVICE**
AUSFAHRBARE GRIFFVORRICHTUNG
DISPOSITIF DE PRÉHENSION EXTENSIBLE

(30) Priority: 20.12.2021 IT 202100031850
(43) Date of publication of application: 21.06.2023
(73) Proprietor: Faspar S.p.A., 20087 Robecco sul Naviglio (MI) (IT)
(72) Inventor: AIME, Paolo Ottavio, Milano (IT)
(74) Representative: IP Sextant s.r.l.

(56) References cited:
- EP-B1- 2 712 689
- JP-A- 2011 199 121
- US-A1- 2020 206 909
- US-A1- 2020 269 435

## Description

The present invention relates to an extensible gripping device configured for gripping cutting equipment used in "slitter" type sheet metal cutting lines.

In particular, the present invention relates to an extensible gripping device for equipping a handling robot, to allow the gripping, handling and preparation of cutting equipment for a "slitter" type cutting line.

In the following description and claims, explicit reference will be made to a cutting equipment comprising annular or cylindrical tools such as circular or annular cutting blades, separators, rubber rings, etc. usable for processing metal strips wound on reels, but the person skilled in the art will have no difficulty in understanding how the present invention can be easily implemented also in other technical fields, in particular in all those fields wherein it is necessary to pick up or put away tools from a warehouse.

It is known that in the sector of machining strips of metallic material, the tools are configured as annular elements which, when not in use, are stored in a magazine, hung from one or more tool-holder shafts projecting cantilevered from a fixed wall or by an upright rotatably mounted on a base. Several tools can be positioned along the same tool holder shaft, leaning against each other.

The use of a gripping device configured to selectively grip the individual tools of the cutting equipment, to pick them up or place them with respect to a magazine or, more generally, to a support arm or shaft has been known for some time.

In general, such a gripping device is engaged movably along a support frame, which in turn can be moved, and is configured to individually grip and move circular tools between a pick-up point or station and a release point or station.

The support frame has a linear development along a vertical direction or in other words along a direction normal to the floor on which the gripping device rests.

The support frame can be moved along a track and can be selectively actuated in rotation around an axis of rotation substantially parallel to the vertical direction of the support frame itself.

The gripping device, in turn, is slidably associated with the support frame, so as to be able to slide along the vertical direction - direction of linear development - along which the frame itself extends. Furthermore, the gripping device comprises a gripping element which can be moved selectively with respect to the support frame along a gripping direction which is oriented normal to the direction of linear development.

In general, the gripping device comprises a support arm along which gripping members are slidably engaged, configured to grip or release a cutting tool. In particular, the gripping members are connected to the support arm by means of a carriage, which can be selectively activated in motion by means of suitable actuating members.

The gripping members, therefore, can be moved towards or away from the support frame along the gripping direction.

Such a gripping device has some limitations of use with particular reference to the ability to ensure rapid and precise movement of the individual tools.

The high weight of the tools, in fact, involves a high inertia and causes deformation or bending of the gripping arm and possibly of the gripping device, especially when the gripping members are positioned cantilevered relative to the support arm, following a high excursion in their movement.

These deformations, in turn, determine an imprecise positioning of the gripping device which must be compensated through complex software corrections to be imparted to the movement members of the gripping device. The incorrect or inaccurate positioning of the gripping device can cause accidental impacts during the handling of the individual tools, with consequent damage to them and the need to replace them, if possible, with additional cutting tools.

Damage to the cutting tools results in tooling downtime and therefore non-operation of the entire cutting line, with negative repercussions on production costs.

Furthermore, the heavy weight of the cutting equipment limits the actuation speed of the gripping device, thus increasing setup times.

Documents US2020/0269435A1, CN 111890335A and CN 111055271A describe some examples of systems for gripping and handling tools.

Documents JP2011199121A, US 2020206909A1 and EP 2712689B1 describe further examples of manipulation systems of the traditional type each comprising an extendable portion.

The object of the present invention is to allow in a simple, efficient and rapid way the gripping and handling of annular or cylindrical tools, even of heavy weight, of the type used in a cutting equipment of a slitter line.

Another object of the present invention is to allow the gripping of individual tools which make up a cutting fixture, by means of an extensible gripping device which has a resistant and rigid structure which allows rapid and precise handling of the individual tools themselves.

A further object of the present invention is that of optimizing the time required for the forming of a cutting equipment through the movement of the single tools which make up the cutting equipment itself.

The specific object of the invention is an extensible gripping device according to claim 1 configured for gripping a tool, wherein the extensible gripping device comprises gripping members, an extendable structure for supporting and moving the gripping members along a gripping direction, attachments configured for attaching the extendable grip device to a frame, wherein the attachment plates delimit the extendable grip device from opposite sides and are connected to each other via a transversal element (cross member), wherein the extensible frame comprises two operatively connected side plates sliding opposite sides of the cross member, a first cradle element (cradle member) slidably connected to the side plates and a second cradle element (cradle member) slidably connected to the first cradle member, wherein the gripping members are operatively connected to the second cradle member, a motor unit operationally connected to the side plates via a first transmission assembly, wherein the first transmission assembly is configured to move the side plates relative to the fixing plates along the gripping direction, a second transmission assembly configured to kinematically connect the side plates with the first cradle element and the first cradle element with the second cradle element through respective pinion-rack type connections, so that the movement of the lateral plates with respect to the fixing plates determines a simultaneous movement of the first cradle element which, in turn, causes a simultaneous movement of the second cradle element all with the same forward direction along the gripping direction, wherein the motor unit is constrained to the transversal element and the first transmission unit comprises a mechanical transmission for connecting the motion output of the motor unit to both the side plates.

According to another aspect of the invention, the first transmission unit can comprise a recirculating screw which protrudes from the motion output of the motor unit, along a direction parallel to the gripping direction and engages a corresponding bush connected to both side plates by means of brackets which protrude from opposite sides of the bush.

According to a further aspect of the invention, the second cradle element can be fitted inside the first cradle element and both have a respective open top portion to allow access to their interior.

According to an additional aspect of the invention, the second transmission unit can comprise two first racks, each connected to a respective one of the fixing plates, and two first external pinions each pivoted to a respective one of the side plates and in engagement with a respective one of the first racks, wherein the outer pinions project outwards of a respective one between the side plates.

According to another aspect of the invention, the second transmission unit can comprise first internal sprockets each keyed on a same first shaft along which a respective first external sprocket is coupled, wherein each of the first shafts is rotatably connected passing through a between the side plates, in such a way as to project from both sides of this respective between the side plates and to support on one side one of the first outer sprockets and on an opposite side one of the first inner sprockets, wherein the first internal pinions mesh with a respective one of the second bottom racks, comprised in the second transmission unit, wherein each of the second bottom racks protrudes outwards from a respective one of the lateral sides of the first cradle element.

According to a further aspect of the invention, the second bottom racks may be positioned offset from the first racks, wherein the first racks mesh mutually between the first outer pinions at a top portion of the first outer pinions and the second outer racks bottom respectively mesh between the second inner pinions at a bottom portion thereof.

According to an additional aspect of the invention, the second drive unit may comprise two second top racks each of which extends outwardly from a respective one of the side plates and meshes with a respective one of the second outer sprockets, included in the second drive unit, wherein each of the second outer pinions is pivoted outwardly of a respective sidewall of the first cradle member by a respective second shaft, wherein each of the second shafts extends through a respective sidewall of the first cradle member and supports from a side opposite to that engaged by the second outer sprockets a respective one between second inner sprockets.

According to another aspect of the invention, each of the second internal pinions can protrude internally from a respective side of the first cradle element, in a position interposed between the lateral sides of the first cradle element and the lateral sides of the second cradle element, wherein each of the second internal pinions engages a respective one of the third racks comprised in the second transmission unit, wherein each of the third racks is externally connected to a lateral side of the second cradle element.

According to a further aspect of the invention, each of the third racks may be positioned offset relative to a respective one of the top second racks, such that each of the third racks engages a bottom portion of a respective one of the second inner pinions and each of the second top racks engages a top portion of a respective one of the second outer pinions.

According to an additional aspect of the invention, the extensible gripping device can comprise at least one linear position sensor operatively connected to the cross member and to at least one of the side plates to detect a relative position of the side plates with respect to the cross member, wherein the at least one linear position sensor is operatively connected to the at least one control logic unit or comprises an indirect rotary sensor operatively connected to the control logic unit and via an encoder to the motor unit.

According to another aspect of the invention, the gripping members can be connected to the second cradle element via a rail, connected to a bottom portion of the second cradle element and a carriage which slidably engages the rail, along a direction parallel to the direction gripping device, the extensible gripping device comprising actuating members connected to the second cradle element and to the carriage for selectively moving the carriage between a retracted position and an extracted position relative to the second cradle element.

The advantages offered by the extensible gripping device according to the invention are evident.

In particular, the extensible gripping device according to the invention has an extendable structure, which can be moved between a retracted position and an extracted position, so as to ensure precise movement of cutting tools, even in the case in which such tools have a high weight.

The extensible gripping device according to the invention has an extendable structure comprising several connected components that are movable together, so as to be able to slide with respect to each other.

In particular, the single components have a high strength and mechanical rigidity as well as their reciprocal connection, so as to prevent any deformation of the structure during its movement in extension or in return towards a retracted position.

The movement of the individual components occurs via a pinion-rack transmission system capable of ensuring a precise and rapid movement and such as to effectively counteract the inertia of the individual tools during their movement.

The present invention will now be described, for illustrative but not limiting purposes, according to its preferred embodiments, with particular reference to the Figures of the attached drawings, wherein:
Figure 1 shows an overall perspective view of an extensible gripping device according to the invention installed on board a handling structure;
Figure 2 shows a top perspective view of an extensible gripping device according to the invention, in a retracted configuration;
Figure 3 shows a simplified top perspective view of the extensible gripping device according to the invention, in an extracted configuration;
Figure 4 shows a front view of the extensible gripping device of Figure 3;
Figure 5 shows a perspective view from below of the extensible gripping device of Figure 3;
Figure 6 shows a bottom view of the extensible gripping device according to the invention, in the extracted configuration,
Figure 7 shows a detailed perspective view of some components of the extensible gripping device according to the invention.

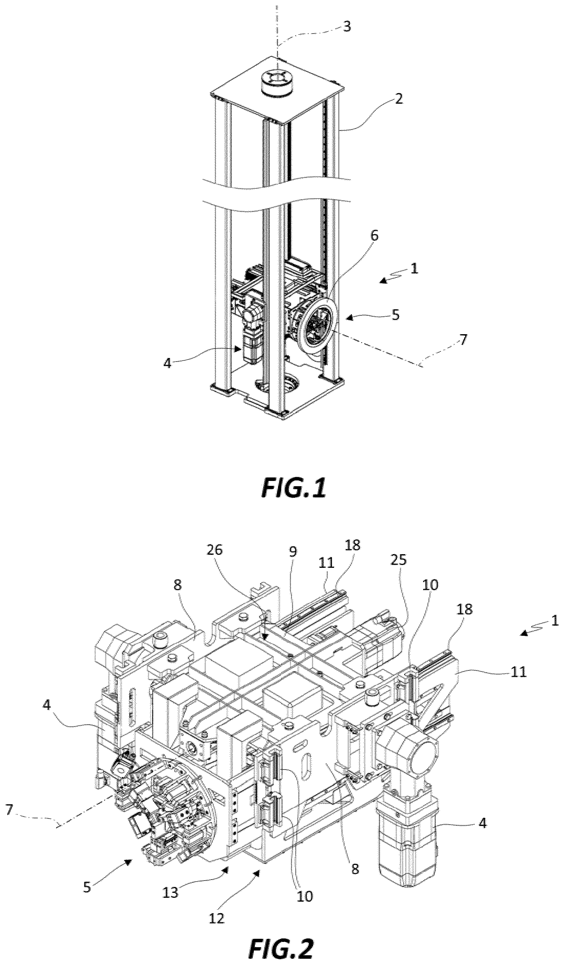

The attached Figure 1 shows an extensible gripping device according to the invention, indicated as a whole with 1, connected to a handling structure.

In particular, the extensible gripping device 1 is slidably connected along a frame 2.

The frame 2 has an elongated shape and comprises a base portion and a top portion, both with a rectangular or square plan, mutually connected by column elements.

The frame 2, therefore, has a column shape, open on four sides, which develops along a development direction 3.

The development direction 3 is vertical with respect to a ground or pavement along which the frame 2 can be installed.

The frame 2 can be operated in rotation around the direction of development 3 and is optionally slidably engaged along a ground guide, not shown in the attached Figure 1, according to methods within the reach of a person skilled in the art.

The frame 2 comprises movement members 4 operatively connected to opposite sides of the extensible gripping device 1 and to the frame 2, configured to selectively control the movement of the latter along the frame 2.

The frame 2 and the movement members 4 do not form a specific object of the present invention and, therefore, will not be further described hereinafter.

The extensible gripping device 1 comprises gripping members, indicated as a whole with 5, configured to selectively grip and hold individual tools that make up the cutting equipment of a slitter-type cutting line.

With reference to what is illustrated by way of example in the attached Figure 1, the gripping members 5 are configured to grip and hold an annular-type cutting blade 6, while understanding that they are configured to grip further annular or cylindrical elements such as rubber spacers or rings able to compose a previously described cutting equipment.

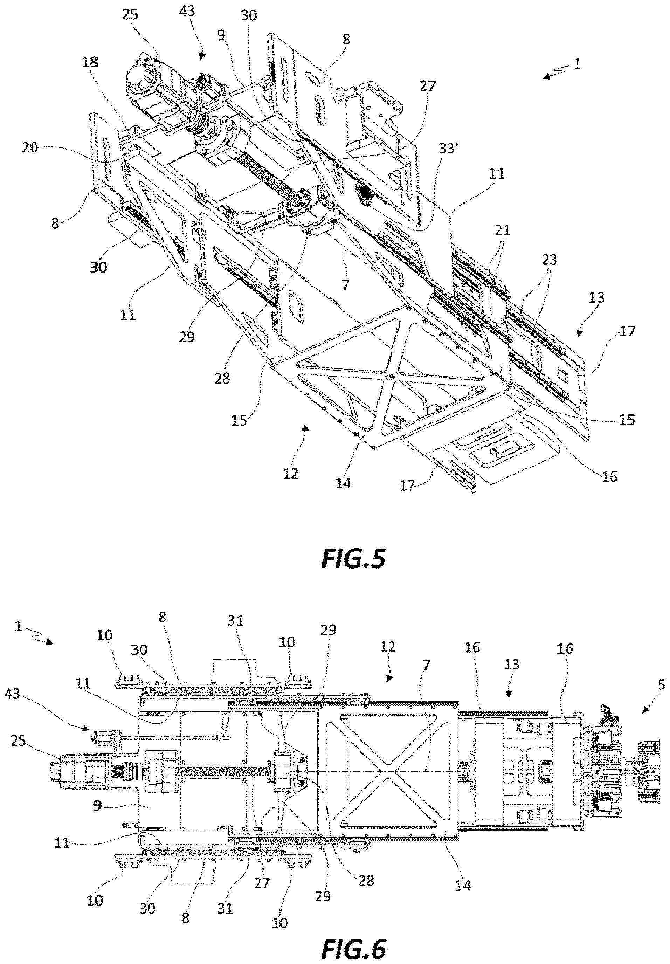

The gripping members 5 comprise gripping elements of a mechanical type, such as a self-centering chuck or similar, an electromagnet or a combination thereof (the latter option is shown in the attached Figures 2 and 6), without limitation.

In general, similar gripping members 5 are known in the field and, as such, they do not form the specific object of the present invention except in relation to their use in the extensible gripping device 1.

In the following description and in the attached Figures, the discussion and illustration of the gripping members 5 will be limited to those components which are useful for understanding the present invention.

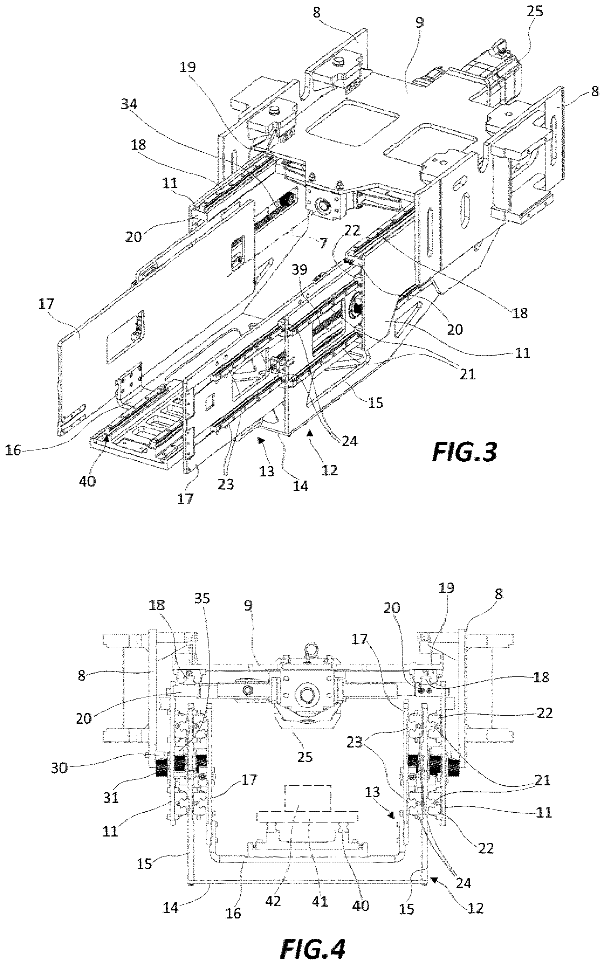

The extensible gripping device 1 can be moved along a gripping direction 7 between a retracted configuration, wherein it has a minimum length (see for example Figure 2) and an extracted position wherein it has a maximum length (see for example Figure 3 and 6).

In this regard, the extensible gripping device 1 comprises an extendable structure configured to selectively support and move the gripping members 5 along the gripping direction 7.

The gripping direction 7 is orthogonal or substantially orthogonal to the development direction 3 of the frame 2.

The extendable structure is therefore configured to selectively extend along the gripping direction 7 between a retracted position and an extracted position.

The extendable grip device 1 comprises two fastening plates 8 for attaching the extensible gripping device 1 to the frame 2.

The fastening plates 8 laterally delimit, on opposite sides, the extensible gripping device 1 and are mutually connected, at one of their ends, by means of a transversal element 9, to define a substantially "U"-shaped structure, with the concavity facing towards a bottom portion of the extensible gripping device 1.

The fastening plates 8 comprise skids 10 or similar elements which extend outside the fastening plates 8 themselves (see for example Figure 2), i.e. which extend outside the extensible gripping device 1, and are configured to slidably engage respective guides, not shown in the attached Figures, which extend along the frame 2 to allow the sliding connection between the extensible gripping device 1 and the frame 2.

Furthermore, the fastening plates 8 act as a support for the movement members 4 which, in turn, move the extensible gripping device 1 along the direction of development 3.

The fastening plates 8 and the cross member 9 serve as a support for the extensible frame of the extensible gripping device 1 and the frame 2.

According to a preferred embodiment illustrated in the attached Figures, the transversal element 9 is shaped like a plate. Optionally, the transversal element 9 comprises one or more crosspieces or longitudinal members constrained to a top portion of the transversal element 9, to mechanically stiffen and reinforce the same (see for example Figure 2. In the remaining Figures, these crosspieces or longitudinal members are been purposely removed to facilitate understanding of the conformation of the cross member 9).

The fastening plates 8 are positioned opposite and parallel to each other and act as supports for the extensible structure.

As mentioned, the extensible structure comprises movable elements, slidably connected to each other along the gripping direction 7.

In this regard, it should be noted that the extensible structure comprises two lateral plates 11, slidingly connected to opposite sides of the transversal element 9, a first cradle element 12, in turn slidingly connected to both lateral plates 11, and a second cradle 13 slidingly connected to the first cradle element 12.

The second cradle element 13 is placed inside the first cradle element 12 which, in turn, is placed between the two lateral plates 11.

The lateral plates 11 are positioned interposed between the fastening plates 8.

In other words, the extendable structure is positioned between the fastening plates 8.

The term "cradle element" is intended to indicate an element which has at least one bottom element which at least partially delimits a bottom portion in such a way as to define a concavity facing upwards or in other words towards the top of the element to cradle itself.

Each of the cradle elements has a front opening and a rear opening, opposite each other to allow the relative sliding of a cradle element with respect to the next and the possibility of being retracted inside each other.

Furthermore, each of the cradle elements has an open top portion which facilitates access to its interior, for example to facilitate normal maintenance operations and, in general, access to the components housed inside the extensible gripping device 1.

Each of the cradle elements preferably has a "U" cross-section, as mentioned with the concavity facing a top of the extensible gripping device 1, while understanding that alternative embodiments are possible, not shown, which have a "V" or semicircular, semi-elliptical or polygonal shape or more generally define a concavity facing the top portion of the extensible gripping device 1.

The shape of the bottom portion of the first cradle element 12 and that of the second cradle element 13 depends on the needs of use and, therefore, can vary.

With reference to what is illustrated in the attached Figures, the first cradle element 12 and the second cradle element 13 each comprise individual lateral plate elements connected to each other via a plate or a crosspiece, preferably via a removable connection, for example of the bolted type, although it is considered that according to an alternative embodiment the single plate elements can be connected to each other in a permanent way, by means of welding.

By way of non-limiting example, the first cradle element 12 comprises a first bottom plate 14 to whose opposite sides respective two first lateral plates 15 are connected to define the cradle shape.

The first lateral plates 15 are parallel to each other and perpendicular or substantially perpendicular to the first bottom plate 14.

The first bottom plate 14 and the first lateral plates 15 can delimit one or more openings, to lighten the overall weight of the first cradle element 12 and to promote the access inside the first cradle element 12 itself.

The second cradle element 13 has a structure similar to that described in relation to the first cradle element 12, comprising at least one bottom crosspiece 16 and two second lateral plates 17 connected to the opposite ends thereof according to the same methods described in relation to the first cradle element 12 to which reference is made. In particular, with reference to what is illustrated in the attached Figure 6, the second cradle element 12 comprises two bottom crosspieces 16 while understanding that an alternative embodiment of the second cradle element 13 comprises a bottom plate instead of two crosspieces bottom.

It is understood that alternative embodiments of the first cradle element 12 are possible, not shown in the Figures, wherein the first lateral plates 15 are parallel to each other and inclined with respect to the first bottom plate 14 or, again, without the bottom plate 14 with the lateral plates 15 directly connected to each other by brackets.

Similar considerations apply in relation to alternative embodiments of the second cradle element 13.

Using several plate elements and crosspieces to obtain the first cradle element 12 and the second cradle element 13 simplifies the mechanical machining necessary for the creation of openings or seats for the connection or housing of the components of the extensible gripping device 1.

The first cradle element 12 and the second cradle element 13, as well as the side plates 11 are made of metal, preferably of aluminum alloy although it is understood that it is possible to use alternative metal alloys which have high performance in relation to their weight, for example magnesium alloys.

According to a further embodiment, at least one of the first cradle element 12 and the second cradle element 13 is made by means of a single metal plate, possibly perforated, suitably bent to assume a cradle configuration, with a "U" or "V" or according to further variants described above, to which reference is fully made.

It is understood that alternative embodiments of the extensible gripping device 1 are possible, not illustrated in the attached Figures, comprising a third cradle element or even further cradle elements, slidably connected to each other, although falling within the same inventive concept of the extensible gripping device 1 according to the invention.

The overall number of cradle elements present in the extensible gripping device 1 can vary according to some operating parameters including, for example, the maximum pre-established length along the gripping direction 7 that the extensible gripping device 1 must be able to assume or the maximum load that can be transported.

The extensible gripping device 1 comprises lateral linear guides 18 for the sliding connection between the lateral plates 11 and the cross member 9.

Each of the lateral linear guides 18 is connected to a top portion of a respective side plate 11 and engages respective bottom skids 19 which extend from a bottom portion of the cross member 9 (see, for example, the diagram of Figure 4).

The lateral linear guides 18 are parallel to each other and to the gripping direction 7.

According to a preferred embodiment, each of the lateral linear guides 18 protrudes from a respective support 20 which, in turn, protrudes from a top portion of a respective one of the lateral plates 11 (see for example Figures 4 and 5).

In practice, the lateral linear guides 18 and the relative bottom skids 19 define a sliding connection between the lateral plates 11 and the transversal element 9 and, consequently, between the lateral plates 11 and corresponding between the fastening plates 8, along the gripping direction 7.

The first cradle element 12 is slidably connected to both side plates 11 according to similar methods.

In more detail, the extensible gripping device 1 comprises first linear guides 21 which protrude outwardly from the first cradle element 12 and slidably engage respective first shoes 22 which protrude internally from the side plates 11 (see Figure 4).

The first linear guides 21 are parallel to each other and to the gripping direction 7 and extend outside the first cradle element 12, each from a respective lateral side of the first cradle element 12 itself.

The first skids 22 extend inside each of the lateral plates 11, i.e. in the space delimited between the side plates 11.

With reference to the schematic view illustrated in the attached Figure 4, wherein some components have been specifically removed to facilitate the intelligibility of the extensible structure, the extensible gripping device 1 comprises two pairs of first linear guides 21, wherein each pair is placed at a lateral side of the first cradle element 12.

In practice, the first linear guides 21 and the respective first skids 22 define the sliding connection between the first cradle element 12 and the lateral plates 11 along the gripping direction 7.

The extensible gripping device 1 comprises second linear guides 23 which protrude outwardly from the second cradle element 13, so as to face respective lateral sides of the first cradle element 12 and engage respective second skids 24 which protrude internally from the first cradle element 12 (see, for example, Figure 4).

The second linear guides 23 are parallel to each other and to the gripping direction 7.

The second linear guides 23 and the respective second skids 24 define a sliding connection between the first cradle element 12 and the second cradle element 13 along the gripping direction 7.

It is understood that with respect to the preferred embodiment of the extensible gripping device 1 described above, alternative embodiments are possible, not shown in the attached Figures, wherein at least one of the second linear guides 23 protrudes from a bottom portion of the second element cradle 13 and engages respective second skids 24 which, similarly, extend at a bottom portion of the first cradle element 12.

It is understood that alternative embodiments of the linear guides are possible, which slidingly connect the side plates 11 to the first cradle element 12 or the first cradle element 12 to the second cradle element 13, for example comprising circular bars, slidingly engaged in respective bushings, instead of skids, or similar systems although capable of ensuring a sliding and guided motion along a pre-established linear direction.

With reference to what has been described above, it is evident that the sliding connections between the lateral plates 11 and the first cradle element 12, as well as those between the first cradle element 12 and the second cradle element 13 allow to limit or avoid the occurrence of flexural deformation phenomena of the extensible structure during its extension/withdrawal along the gripping direction 7.

In practice, the shape of the individual mobile elements of the extensible structure and their sliding connections confer a high rigidity and flexural strength, to promote a precise movement of the extensible structure and of the gripping members 5 connected to it along the gripping direction 7, overcoming a drawback which affects the solutions of the state of the art.

The extensible gripping device 1 comprises a motor unit 25 operatively connected to the lateral plates 11 through a first transmission unit, to move both lateral plates 11 simultaneously and in a synchronized manner relative to the fastening plates 8, along the gripping direction 7 and a second transmission unit configured to transmit the motion of the lateral plates 11 to the first cradle element 12 and to the second cradle element 13, moving them in turn along the gripping direction 7.

As will be better described below, the motor unit 25 in synergy with the first transmission unit and the second transmission unit moves the extensible structure in extraction or retraction along the gripping direction 7.

The motor unit 25 comprises an electric motor operatively connected to at least one control logic unit 26 (see for example Figure 2) by means of which its operation is controlled, according to methods within the reach of a person skilled in the art.

According to a preferred embodiment, illustrated in the attached Figures, the motor unit 25 is connected to the transversal element 9 (see, for example, Figure 5), so as to project cantilevered from a bottom portion of the transversal element 9 same.

With reference to the view illustrated in Figure 4, the motor unit 25 extends into the space delimited between the transverse 9 and the fastening plates 8.

The first transmission unit comprises a recirculating screw type transmission for connecting the motion output of the motor unit 25 to both lateral plates 11 and determining their movement along the gripping direction 7.

In more detail, it should be noted that the first transmission unit comprises a recirculating screw 27, for example a recirculating ball or roller screw, mounted in line with the motor unit 25 and which protrudes from the output of the latter along a parallel direction to the gripping direction 7 and engages a corresponding bush 28 connected to both lateral plates 11 by means of brackets 29 which branch off from opposite sides of the bush 28 itself (see, for example, Figures 5 and 6).

It is understood that according to an alternative embodiment, not shown in the enclosed Figures, the first transmission group comprises a transmission of the screw/nut screw type in place of the recirculating screw and the relative bush.

The rotational actuation of the motor unit 25 therefore determines the movement of the bush 28 along the gripping direction 7 and, consequently, the movement of both lateral plates 11 along the gripping direction 7 itself.

It is observed that both lateral plates 11 are moved relative to both fastening plates 8 as well as the cross member 9.

As mentioned, the extensible gripping device 1 comprises a second transmission unit which connects in a kinematic way each of the lateral plates 11 to respective between the fastening plates 8, as well as the lateral plates 11 to the first cradle element 12 and the first element to cradle 12 to the second cradle element 13, to command the movement of the first cradle element 12 and of the second cradle element 13 along the gripping direction 7.

According to a preferred embodiment, the second transmission group comprises kinematic couplings of the pinion-rack type.

In more detail, the second transmission unit comprises two first racks 30, each connected to a respective one of the fastening plates 8, and two first external pinions 31, each pivoted to a respective one of the latera plates 11 and engaging along a respective one of the first racks 30.

The first racks 30 extend along a direction parallel to the gripping direction 7 and each of the first external pinions 31 is pivoted to rotate around an axis perpendicular to the gripping direction 7 and normal to a respective one of the lateral plates 11.

The first external pinions 31 project outside a respective one of the lateral plates 11 to which they are pivoted.

The second transmission unit also comprises two first internal pinions 32 each keyed on the same first shaft 33 along which a respective one of the first external pinions 31 is constrained.

Each first shaft 33 is rotatably supported passing through a respective lateral plate 11. In practice, each first shaft 33 extends from both sides of a respective lateral plate 11 to act as a support for a respective first outer pinion 31 and a respective between the first 32 internal sprockets.

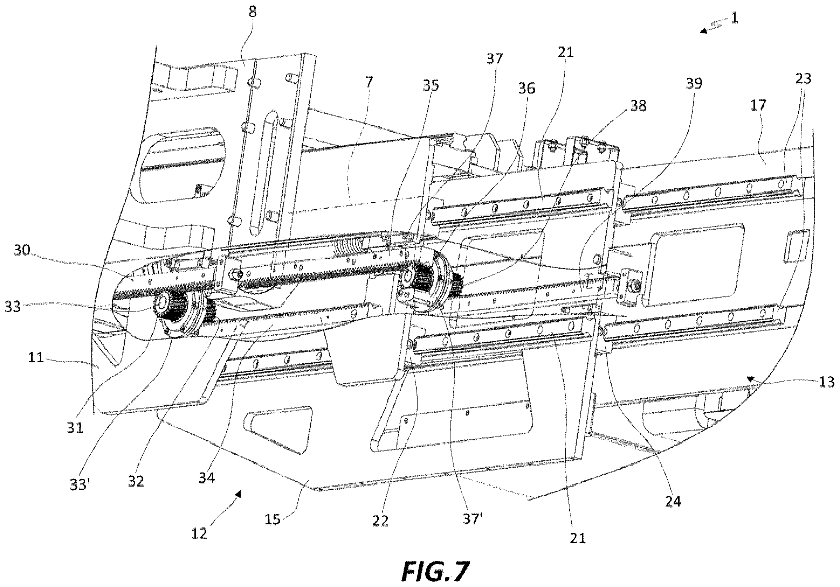

By way of example, each of lateral side plates 11 can have a first seat 33° in which a respective one of the first shafts 33 is housed and kept rotating (see Figures 5 and 7).

Preferably, the first external sprockets 31 have the same dimensions, with reference to their external diameter, as those of the first internal sprockets 32.

Each of the first internal pinions 32 meshes with a respective one of the second bottom racks 34 included in the second transmission group, in which the second bottom racks 34 protrude outwardly from the lateral sides of the first cradle element 12.

The second bottom racks 34 extend parallel to each other and to the gripping direction

7. The second bottom racks 34 are positioned along the side walls which delimit the first cradle element 12.

In particular, the second bottom racks 34 are positioned offset with respect to the first racks 30 relative to the first internal pinions 32, so that while the first racks 30 mesh respectively between the first external pinions 31 at a top portion of the first outer pinions 31 themselves, the second bottom racks 34 mesh respective between the second inner pinions 32 at a bottom portion thereof.

In other words, the first racks 30 and the second bottom racks 34 are opposed to each other and mutually connected through the first external pinions 31 and the first internal pinions 32.

The rotation of the first external pinions 31 has the same rotational direction to that of the first internal pinions 32 and causes a synchronized and opposite movement of the first racks 30 and of the second bottom racks 34.

In practice, the movement of the lateral plates 11 with respect to the transversal element 9 determines the simultaneous movement of the first cradle element 12 with respect to both side plates 11 along the gripping direction 7, with the same direction.

The second transmission unit further comprises two second top racks 35 each of which protrudes internally from a respective one of the lateral plates 11, to which it is constrained.

Each of the second top racks 35 is positioned so as not to interfere with the second bottom racks 34 and the second inner pinions 32.

The second transmission unit comprises two second external pinions 36, each of which is pivoted on the outside of a respective lateral side of the first cradle element 12 (see Figure 7) and meshes with a respective one of the second top racks 35.

In more detail, each of the second external pinions 36 is pivoted to a respective side of the first cradle element 12 so as to extend outwards of the latter and to face inside one of the respective lateral plates 11.

The second outer pinions 36 are positioned offset from the first inner pinions 32 so as not to interfere with the second bottom racks 34 (see Figure 7 ).

Furthermore, each of the second top racks 35 engages a respective one of the second outer pinions 36 at a top portion of the second outer pinions 36 themselves.

Each of the second external pinions 36 is pivoted to a respective side of the first cradle element 12 via a respective second shaft 37.

In this regard, it should be noted that the first cradle element 12 has second seats 37', each along a lateral side of the first cradle element 12 itself, wherein a respective one of the second shafts 37 is housed and kept rotating (see Figure 7).

Each of the second shafts 37, similarly to what has been described in relation to the first shafts 33, extends through both sides of a respective side of the first cradle element 12.

Similarly to what has been described in relation to the first shafts 33, each of the second shafts 37 extends from both sides of a respective lateral side of the first cradle element 12.

The second transmission unit comprises second internal pinions 38 which protrude internally from the first cradle element 12, from a respective lateral side, being interposed between the lateral sides of the first cradle element 12 and the lateral sides of the second cradle element 13.

Each of the second inner pinions 38 engages a respective one of the second shafts 37.

In practice, each of the second shafts 37 acts as a support for a respective one of the second outer pinions 36 and a respective one of the second inner pinions 38.

Preferably, the second external sprockets 36 have the same dimensions, with reference to their external diameter, as those of the second internal sprockets 38.

The second external pinions 36 and the second internal pinions 38 rotate in the same direction around the same rotation axis which is orthogonal to the gripping direction 7 and parallel to the rotation axis of each of the second shafts 37.

The second transmission group comprises two third racks 39 each externally connected to a respective lateral side of the second cradle element 13, wherein each of the third racks 39 is meshed by a respective one of the second internal pinions 38.

Each of the third racks 39 is positioned offset relative to a respective one of the second top racks 35 with respect to the second outer pinions 36 and the second inner pinions 38.

In this regard, it should be noted that in fact each of the third racks 39 engages a bottom portion of a respective of the second internal pinions 38, while each of the second top racks 35 engages a top portion of a respective of the second external pinions 36.

In practice, each of the second top racks 35 is opposed to a respective one of the third racks 39 to which it is kinematically connected via respective links between the second external pinions 36 and the second internal pinions 38.

The rotation of the second external pinions 36, which has the same rotation direction and is simultaneous to that of the respective ones between the second internal pinions 38 causes a synchronized movement and in the opposite direction, between the second top racks 35 and the third racks 39.

Therefore, the movement of the first cradle element 12 along the gripping direction 7 determines the simultaneous movement of the second cradle element 13, with the same direction.

It should be noted that between the lateral plates 11 and the lateral sides of the first cradle element 12 as well as between the lateral sides of the first cradle element 12 and those of the second cradle element 13 there is an interspace such as to allow the housing of the components of the second transmission unit (see the schematic view of Figure 4).

With reference to the above, the second transmission unit comprises a cascade of pinion-rack kinematic systems operatively connected to each other in such a way that the extraction of the side plates 11 with respect to the fastening plates 8, along the gripping direction 7, causes the extraction of the first cradle element 12 with respect to the side plates 11 themselves and, at the same time, the extraction of the second cradle element 13 with respect to the first cradle element 12.

In other words, the extensible gripping device 1 according to the invention, thanks to the use of the first transmission group and the second transmission group previously described, requires a single motor group 25 to be able to extend or retract along the gripping direction 7, limiting the overall number of components comprised in the extensible gripping device 1 itself.

With reference to the preferred embodiment illustrated in the attached Figures, the second transmission unit comprises two first racks 30, two second bottom racks 34, two second top racks 35 and two third racks 39 which engage respective pinions, within a symmetrical solution with respect to a median plane of central symmetry which develops parallel to the gripping direction 7 and parallel to the lateral plates 11.

This symmetry allows a balanced movement, and therefore without jamming, of the extensible gripping device 1 along the gripping direction 7.

It is understood that an alternative embodiment is possible, not shown in the attached Figures, comprising a second transmission group of the asymmetrical type with respect to this median plane of central symmetry, i.e. comprising a single first rack 30, a second rack bottom 34, a second top rack 35 and a third rack 39.

The extensible gripping device 1 therefore comprises a first and a second transmission unit capable of moving both lateral plates 11, the first cradle element 12 and the second cradle element 13 in an extremely precise and rapid manner, thus allowing effective extraction or recall of the extensible gripping device 1 along the gripping direction 7.

The use of pinion-rack kinematic mechanisms ensures precise movement of the extensible gripping device 1 and capable of effectively counteracting the inertia determined by the individual elements that make up the extensible gripping device 1 itself, as well as that determined by the individual tools 6 when taken from the gripping devices 5.

As mentioned, the extensible gripping device 1 comprises gripping members 5, for the selective gripping of tools 6.

The gripping members 5 are slidably connected to the second cradle element 13, at a bottom portion of the latter, by means of a guide, so as to be able to vary their position relative to the second cradle element 13 itself, in order to selectively extend beyond the overall dimensions in plan of the latter (see Figure 6 wherein the gripping members 5 extend outside the second cradle element 13 along the gripping direction 7).

In detail, the guide comprises a rail 40, connected to a bottom portion of the second cradle element 13 and a carriage 41 which slides into the rail 40, along the gripping direction 7 (see Figure 4).

The extensible gripping device 1 comprises actuation members 42 connected to the second cradle element 13 and configured to selectively move the carriage 41 along the gripping direction 7 between a retracted position, wherein the gripping members 5 are positioned close to a head end of the second cradle element 13 (see for example Figure 2) and an extracted position wherein the gripping members 5 protrude cantilevered from the second cradle element 13 (see Figure 6) to promote the gripping or release of a tool 6.

The actuating members 42 are of the type within the reach of a person skilled in the art and comprise, by way of example, an actuation such as a piston, possibly telescopic, or a pinion-rack unit or a recirculating screw which engages a bushing associated with the carriage 41 or equivalent solutions, which will not be further described.

The actuation members 42 are operatively connected to at least one control logic unit 26 which selectively controls their actuation.

The extensible gripping device 1 comprises position sensors, to detect the reciprocal position of the components of the extendable structure, operatively connected to the logic control unit 26.

In particular, the position sensors make it possible to detect the achievement of at least one limit position by the lateral plates 11 relative to respective fastening plates 8, as well as that of the first cradle element 12 with respect to the lateral plates 11 or that of the second cradle element 13 with respect to the first cradle element 12, according to methods within the reach of a person skilled in the art which, therefore, will not be further described or illustrated.

According to a preferred embodiment, the extensible gripping device 1 comprises at least one linear position sensor 43 operatively connected to the cross member 9 and to at least one of the lateral plates 11 so as to detect the relative position of the lateral plates 11 with respect to the fastening plates 8 (see for example Figure 5).

Knowing the position of the lateral plates 11 determines the position of the front end of the second cradle element 12 along the gripping direction 7.

The at least one linear position sensor 43 is operatively connected to the at least one control logic unit 26.

According to an alternative embodiment not shown in the attached Figures, the extensible gripping device 1 comprises an indirect type rotary sensor operatively connected to the recirculating screw via an encoder to perform the same function described in relation to the linear position sensor to which reference is made .

The extensible gripping device 1 optionally comprises laser or position sensors, not shown in detail in the attached Figures, positioned on the gripping members 5 and operatively connected to the logic control unit 26, which are configured to detect the position of the tool 6 to pick up and transmit related data to the control logic unit which, by comparing them with those of the linear position sensor 43 or of the rotary sensor, controls the movement and positioning of the extensible gripping device 1 along the gripping direction 7.

A brief description of the operation of the extensible gripping device 1 is given below with particular reference to the movement of the extendable structure between the retracted and the extracted configurations.

With the extensible gripping device 1 in the retracted configuration, the at least one motor unit 25 is activated causing the movement of the bush 28, in a sliding manner, along the gripping direction 7, away from the motor unit 25 itself.

The bush 28 determines the sliding of the lateral plates 11 with respect to the fastening plates 8.

The lateral plates 11 advancing along the gripping direction 7 drag the first external pinions 31 which, by engaging respective first racks 30, are actuated in rotation.

The rotation of the first external pinions 31 causes the rotation of the first internal pinions 32 which, in turn, cause the extraction of the second bottom racks 34 with which they mesh and, therefore, the extraction of the first cradle element 12, relatively to the lateral plates 11.

Consequently, the advancement of the first cradle element 12 with respect to the lateral plates 11 determines the advancement of the second external pinions 36 relative to respective between the second top racks 35 with which they mesh, thus determining the rotation of the second external pinions 36.

The rotation of the second external pinions 36 imposes the rotation of the second internal pinions 38 which, in turn, determine the advancement of respective third racks 39 with which they mesh, causing their extraction with respect to the first cradle element 12.

The third racks 39, as mentioned, are constrained externally to the sides of the second cradle element 13 and, therefore, their extraction relative to the first cradle element 12 determines the extraction of the second cradle element 13 itself with respect to the first cradle element 12.

The elongation of the extendable structure along the gripping direction 7 allows the gripping members 5 to be positioned at a pick-up or release point of a tool 6 to be picked up or to be released.

With reference to what has been described above, it is clear that the extensible gripping device 1 is capable of achieving the set objects.

The use of pinion-rack units for moving the lateral plates 11 relative to the fastening plates 8, of the first cradle element 12 with respect to the lateral plates 11 and of the second cradle element 13 with respect to the first cradle element 12 ensures a precise and rapid linear movement of the extensible gripping device 1, avoiding displacements or misalignments due to the load of the at least one tool moved by the extensible gripping device 1 itself with respect to a predetermined positioning.

The extensible gripping device 1 is therefore capable of overcoming a drawback which afflicts the solutions of the prior art.

Furthermore, the use of a transmission comprising pinion-rack units makes it possible to effectively counteract the effects of the inertias acting on the extensible gripping device 1 during its extension or withdrawal, allowing the movement speed of the extensible gripping device 1 to be increased itself and therefore its productivity, understood as the time required to compose a cutting fixture comprising a plurality of tools 6 aligned in succession with each other according to a predetermined pattern.

In the foregoing the preferred embodiments have been described and variants of the present invention have been suggested, but it should be understood that those skilled in the art will be able to make modifications and changes without thereby departing from the relative scope of protection, as defined by the claims attached.

## Claims

1. Extensible gripping device (1) configured for gripping a tool (6), wherein said extensible gripping device (1) comprises:
- gripping members (5),
- an extensible structure for supporting and moving said gripping members (5) along a gripping direction (7),
- fastening plates (8) configured for fixing said extensible gripping device (1) to a frame (2),
wherein said fastening plates (8) delimit said extensible gripping device (1) from opposite sides and are connected to each other via a transversal element (9),
wherein said extensible structure comprises two lateral plates (11) operatively slidably connected to opposite sides of said transversal element (9), a first cradle element (12) slidably connected to said lateral plates (11) and a second cradle element (13) slidably connected to said first cradle element (12), wherein said gripping members (5) are operatively connected to said second cradle element (13),
- a motor unit (25) operatively connected to said lateral plates (11) via a first transmission unit, wherein said first transmission unit is configured to move said lateral plates (11) relative to said fastening plates (8) along said gripping direction (7),
- a second transmission unit configured to kinematically connect said lateral plates (11) with said first cradle element (12) and said first cradle element (12) with said second cradle element (13) via respective connections of pinion-rack type, so that the movement of said lateral plates (11) with respect to said fastening plates (8) causes a simultaneous movement of said first cradle element (12) which, in turn, causes a simultaneous movement of said second cradle element (13) all with the same direction of advancement along said gripping direction (7),
wherein said motor unit (25) is constrained to said transversal element (9) and said first transmission unit comprises a mechanical transmission for connecting the motion output of motor unit (25) to both said lateral plates (11).

2. Extensible gripping device (1) according to claim 1, wherein said first transmission unit comprises a recirculating screw (27) which extends from the motion output of said motor unit (25), along a direction parallel to said gripping direction (7) and engages a corresponding bush (28) connected to both said lateral plates (11) by means of brackets (29) which depart from opposite sides of said bush (28).

3. Extensible gripping device (1) according to claim 1, wherein said second cradle element (13) is fitted inside said first cradle element (12) and both have a respective open top portion to allow access to them.

4. Extensible gripping device (1) according to claim 1, wherein said second transmission assembly comprises two first racks (30), each connected to a respective one of said fixing plates (8) and two first external pinions (31) each pivoted to a respective one of said lateral plates (11) and in engagement with a respective one of said first racks (30), wherein said outer pinions (31) project outside a respective one of lateral plates (11).

5. Extensible gripping device (1) according to claim 4, wherein said second transmission unit comprises first internal pinions (32) each keyed on a same first shaft (33) along which a respective one of said first external pinions (31) is constrained, wherein each of said first shafts (33) is rotatably connected passing through a respective one of said lateral plates (11), so as to extend from either side of that respective one of said lateral plates (11) and from supporting on one side one of said first external pinions (31) and on an opposite side one of said first internal pinions (32), wherein said first internal pinions (32) mesh with a respective second bottom rack (34), including in said second transmission unit, wherein each of said second bottom racks (34) protrudes externally from a respective one of said lateral sides of said first cradle element (12).

6. Extensible gripping device (1) according to claim 5, wherein said second bottom racks (34) are positioned offset with respect to said first racks (30), wherein said first racks (30) mesh respectively between said first pinions outer gears (31) at a top portion of said first outer pinions (31) and said second bottom racks (34) mesh respectively between said second inner pinions (32) at a bottom portion thereof.

7. Extensible gripping device (1) according to claim 5, wherein said second transmission assembly comprises two second top racks (35) each of which extends outward from a respective one between said lateral plates (11) and engages a respective between second external sprockets (36), included in said second transmission group, wherein each of said second external sprockets (36) is pivoted on the outside of a respective lateral side of said first cradle element (12) through a respective between second shafts (37), wherein each of said second shafts (37) extends through a respective lateral side of said first cradle element (12) and supports on a side opposite to that engaged by said second external pinions (36) a respective between second internal sprockets (38).

8. Extensible gripping device (1) according to claim 7, wherein each of said second internal pinions (38) extends internally from a respective side of said first cradle element (12), in a position interposed between side sides of said first cradle element (12) and lateral sides of said second cradle element (13), wherein each of said second internal pinions (38) engages a respective third rack (39) comprised in said second transmission unit, wherein each of said third racks (39) is externally connected to a lateral side of said second cradle element (13).

9. Extensible gripping device (1) according to claims 7 and 8, wherein each of said third racks (39) is positioned offset relative to a respective one of said top second racks (35), such that each of said third racks (39) engage a bottom portion of a respective one of said second inner pinions (38) and each of said second top racks (35) engage a top portion of a respective one of said second outer pinions (36).

10. Extensible gripping device (1) according to any one of the preceding claims, comprising at least one linear position sensor (43) operatively connected to said transversal element (9) and to at least one of said lateral plates (11) to detect a position relative of said lateral plates (11) with respect to said transversal element (9), wherein said at least one linear position sensor (43) is operatively connected to said at least one logic control unit (26) or comprises an indirect rotary sensor operatively connected to said logic control unit (26) and via an encoder to said motor unit (25).

11. Extensible gripping device (1) according to any one of the preceding claims, wherein said gripping members (5) are connected to said second cradle element (13) via a rail (40), connected to a bottom portion of said second cradle element (13) and a carriage (41) which slidably engages said rail (40), along a direction parallel to said gripping direction (7), said extensible gripping device (1) comprising actuation members (42) connected to said second cradle element (13) and to said carriage (41) to selectively move said carriage (41) between a retracted position and an extracted position relative to said second cradle element (13).

## Patentansprüche

1. Ausziehbare Greifvorrichtung (1), die zum Greifen eines Werkzeugs (6) konfiguriert ist, wobei die ausziehbare Greifvorrichtung (1) Folgendes umfasst:
- Greifelemente (5),
- eine ausziehbare Struktur zum Stützen und Bewegen der Greifelemente (5) entlang einer Greifrichtung (7),
- Befestigungsplatten (8), die zum Befestigen der ausziehbaren Greifvorrichtung (1) an einem Rahmen (2) konfiguriert sind, wobei die Befestigungsplatten (8) die ausziehbare Greifvorrichtung (1) von gegenüberliegenden Seiten begrenzen und über ein Querelement (9) miteinander verbunden sind, wobei die ausziehbare Struktur zwei Seitenplatten (11) umfasst, die mit gegenüberliegenden Seiten des Querelements (9) in Wirkverbindung gleitend verbunden sind, ein erstes Wiegeelement (12), das mit den Seitenplatten (11) gleitend verbunden ist, und ein zweites Wiegeelement (13), das mit dem ersten Wiegenelement (12) verbunden ist, wobei die Greifelemente (5) mit dem zweiten Wiegenelement (13) wirkverbunden sind,
- eine Motoreinheit (25), die über eine erste Übertragungseinheit mit den seitlichen Platten (11) wirkverbunden ist, wobei die erste Übertragungseinheit so konfiguriert ist, dass sie die seitlichen Platten (11) relativ zu den Befestigungsplatten (8) entlang der Greifrichtung (7) bewegt,
eine zweite Übertragungseinheit, die so konfiguriert ist, dass sie die seitlichen Platten (11) kinematisch mit dem ersten Wiegenelement (12) und das erste Wiegenelement (12) mit dem zweiten Wiegenelement (13) über jeweilige Verbindungen vom Typ Ritzel-Zahnstange verbindet, so dass die Bewegung der seitlichen Platten (11) in Bezug auf die Befestigungsplatten (8) eine gleichzeitige Bewegung des ersten bewirkt, was wiederum eine gleichzeitige Bewegung des zweiten Wiegenelements (13) bewirkt, und zwar alle mit derselben Vorschubrichtung entlang der Greifrichtung (7),
wobei die Motoreinheit (25) an dem Querelement (9) befestigt ist und die erste Übertragungseinheit ein mechanisches Getriebe zum Verbinden des Bewegungsausgangs der Motoreinheit (25) mit beiden Seitenplatten (11) umfasst.

2. Ausziehbare Greifvorrichtung (1) nach Anspruch 1, wobei die erste Übertragungseinheit eine Umlaufspindel (27) umfasst, die sich von der Bewegungsausgabe der Motoreinheit (25) entlang einer Richtung parallel zur Greifrichtung (7) erstreckt und in eine entsprechende Buchse (28) eingreift, die mit beiden Seitenplatten (11) mittels Klammern (29) verbunden ist, die von gegenüberliegenden Seiten der Buchse (28) abgehen.

3. Ausziehbare Greifvorrichtung (1) nach Anspruch 1, wobei das zweite Wiegenelement (13) in das erste Wiegenelement (12) eingepasst ist und beide jeweils einen offenen oberen Abschnitt aufweisen, um den Zugang zu ihnen zu ermöglichen.

4. Ausziehbare Greifvorrichtung (1) nach Anspruch 1, wobei die zweite Übertragungsbaugruppe zwei erste Zahnstangen (30), die jeweils mit einer entsprechenden der Befestigungsplatten (8) verbunden sind, und zwei erste äußere Ritzel (31) umfasst, die jeweils an einer entsprechenden der seitlichen Platten (11) angelenkt sind und mit einer entsprechenden der ersten Zahnstangen (30) in Eingriff stehen, wobei die äußeren Ritzel (31) aus einer entsprechenden der seitlichen Platten (11) herausragen.

5. Ausziehbare Greifvorrichtung (1) nach Anspruch 4, wobei die zweite Übertragungseinheit erste Innenritzel (32) umfasst, die jeweils auf einer gleichen ersten Welle (33) verkeilt sind, entlang derer ein jeweiliges der ersten Außenritzel (31) eingespannt ist, wobei jede der ersten Wellen (33) drehbar verbunden ist und durch eine jeweilige der Seitenplatten (11) hindurchgeht, so dass sie sich von jeder Seite der jeweiligen Seitenplatte Seitenplatten (11) erstreckt und auf einer Seite eines der ersten äußeren Ritzel (31) und auf einer gegenüberliegenden Seite eines der ersten inneren Ritzel (32) trägt, wobei die ersten inneren Ritzel (32) mit einer jeweiligen zweiten unteren Zahnstange (34) kämmen, die in der zweiten Übertragungseinheit enthalten ist, wobei jede der zweiten unteren Zahnstangen (34) von einer jeweiligen der seitlichen Seiten des ersten Wiegenelements (12) nach außen vorsteht.

6. Ausziehbare Greifvorrichtung (1) nach Anspruch 5, wobei die zweiten unteren Zahnstangen (34) versetzt in Bezug auf die ersten Zahnstangen (30) positioniert sind, wobei die ersten Zahnstangen (30) jeweils zwischen den ersten äußeren Ritzeln (31) an einem oberen Abschnitt der ersten äußeren Ritzel (31) ineinander greifen und die zweiten unteren Zahnstangen (34) jeweils zwischen den zweiten inneren Ritzeln (32) an einem unteren Abschnitt davon ineinander greifen.

7. Ausziehbare Greifvorrichtung (1) nach Anspruch 5, wobei die zweite Übertragungsbaugruppe zwei zweite obere Zahnstangen (35) umfasst, von denen sich jede von einer entsprechenden zwischen den Seitenplatten (11) nach außen erstreckt und in ein entsprechendes zwischen den zweiten äußeren Kettenrädern (36) eingreift, die in der zweiten Übertragungsgruppe enthalten sind, wobei jedes der zweiten äußeren Kettenräder (36) an der Außenseite einer jeweiligen seitlichen Seite des ersten Wiegenelements (12) durch eine jeweilige zwischen zweite Wellen (37) schwenkbar ist, wobei jede der zweiten Wellen (37) sich durch eine jeweilige seitliche Seite des ersten Wiegenelements (12) erstreckt und auf einer Seite, die der Seite gegenüberliegt, an der die zweiten äußeren Ritzel (36) angreifen, ein jeweiliges zwischen zweites inneres Kettenrad (38) trägt.

8. Ausziehbare Greifvorrichtung (1) nach Anspruch 7, wobei sich jedes der zweiten inneren Ritzel (38) von einer jeweiligen Seite des ersten Wiegenelements (12) nach innen erstreckt, in einer Position, die zwischen den Seiten des ersten Wiegenelements (12) und den Querseiten des zweiten Wiegenelements (13) befindet, wobei jedes der zweiten inneren Ritzel (38) in eine jeweilige dritte Zahnstange (39) eingreift, die in der zweiten Übertragungseinheit enthalten ist, wobei jede der dritten Zahnstangen (39) außen mit einer Querseite des zweiten Wiegenelements (13) verbunden ist.

9. Ausziehbare Greifvorrichtung (1) gemäß den Ansprüchen 7 und 8, wobei jede der dritten Zahnstangen (39) versetzt zu einer entsprechenden der oberen zweiten Zahnstangen (35) positioniert ist, so dass jede der dritten Zahnstangen ( 39) mit einem unteren Abschnitt eines jeweiligen der zweiten inneren Ritzel (38) in Eingriff stehen und jede der zweiten oberen Zahnstangen (35) mit einem oberen Abschnitt eines jeweiligen der zweiten äußeren Ritzel (36) in Eingriff steht.

10. Ausziehbare Greifvorrichtung (1) gemäß einem der vorstehenden Ansprüche, umfassend mindestens einen linearen Positionssensor (43), der mit dem Querelement (9) und mindestens einer der seitlichen Platten (11) wirkverbunden ist, um eine Position der seitlichen Platten (11) in Bezug auf das dem Querelement (9) zu erfassen, wobei der mindestens eine lineare Positionssensor (43) mit der mindestens einen Logiksteuereinheit (26) wirkverbunden ist oder einen indirekten Drehsensor umfasst, der mit der Logiksteuereinheit (26) wirkverbunden ist und über einen Codierer mit der Motoreinheit (25) wirkverbunden ist.

11. Ausziehbare Greifvorrichtung (1) gemäß einem der vorstehenden Ansprüche, wobei die Greifelemente (5) mit dem zweiten Wiegenelement (13) über eine Schiene (40) verbunden sind, die mit einem unteren Abschnitt des zweiten Wiegenelements (13) und einem Schlitten (41) verbunden ist, der entlang einer Richtung parallel zur Greifrichtung (7) verschiebbar ist, wobei die ausziehbare Greifvorrichtung (1) Betätigungselemente (42) umfasst, die mit dem zweiten Wiegenelement (13) und dem Schlitten (41) verbunden sind, um den Schlitten (41) selektiv zwischen einer zurückgezogenen Position und einer ausgefahrenen Position relativ zum zweiten Wiegenelement (13) zu bewegen.

## Revendications

1. Dispositif de préhension extensible (1) configuré pour saisir un outil (6), dans lequel ledit dispositif de préhension extensible (1) comprend :
- des organes de préhension (5),
- une structure extensible pour supporter et déplacer lesdits organes de préhension (5) le long d'une direction de préhension (7),
- des plaques de fixation (8) configurées pour fixer ledit dispositif de préhension extensible (1) à un cadre (2),
dans lequel lesdites plaques de fixation (8) délimitent ledit dispositif de préhension extensible (1) à partir de côtés opposés et sont reliées l'une à l'autre par l'intermédiaire d'un élément transversal (9),
dans lequel ladite structure extensible comprend deux plaques latérales (11) reliées à coulissement de manière fonctionnelle à des côtés opposés dudit élément transversal (9), un premier élément de berceau (12) relié à coulissement auxdites plaques latérales (11) et un second élément de berceau (13) relié à coulissement audit premier élément de berceau (12), où lesdits organes de préhension (5) sont reliés de manière fonctionnelle audit second élément de berceau (13),
- une unité motrice (25) reliée de manière fonctionnelle auxdites plaques latérales (11) par l'intermédiaire d'une première unité de transmission, où ladite première unité de transmission est configurée pour déplacer lesdites plaques latérales (11) par rapport auxdites plaques de fixation (8) le long de ladite direction de préhension (7),
- une seconde unité de transmission configurée pour relier de manière cinématique lesdites plaques latérales (11) audit premier élément de berceau (12) et ledit premier élément de berceau (12) audit second élément de berceau (13) par l'intermédiaire de liaisons respectives de type à pignon et crémaillère, de sorte que le mouvement desdites plaques latérales (11) par rapport auxdites plaques de fixation (8) provoque un mouvement simultané dudit premier élément de berceau (12) qui, à son tour, provoque un mouvement simultané dudit second élément de berceau (13) le tout avec la même direction d'avancement le long de ladite direction de préhension (7),
dans lequel ladite unité motrice (25) est contrainte audit élément transversal (9) et ladite première unité de transmission comprend une transmission mécanique pour relier la sortie de mouvement de l'unité motrice (25) auxdites deux plaques latérales (11).

2. Dispositif de préhension extensible (1) selon la revendication 1, dans lequel ladite première unité de transmission comprend une vis de recirculation (27) qui s'étend à partir de la sortie de mouvement de ladite unité motrice (25), le long d'une direction parallèle à ladite direction de préhension (7) et s'engage dans une douille correspondante (28) reliée auxdites deux plaques latérales (11) au moyen de pattes de fixation (29) qui partent de côtés opposés de ladite douille (28).

3. Dispositif de préhension extensible (1) selon la revendication 1, dans lequel ledit second élément de berceau (13) est monté à l'intérieur dudit premier élément de berceau (12) et les deux ont une partie supérieure ouverte respective pour permettre l'accès à ceux-ci.

4. Dispositif de préhension extensible (1) selon la revendication 1, dans lequel ledit second ensemble de transmission comprend deux premières crémaillères (30), chacune reliée à une plaque respective desdites plaques de fixation (8) et deux premiers pignons externes (31) chacun pivotant sur une plaque respective desdites plaques latérales (11) et en prise avec une crémaillère respective desdites premières crémaillères (30), où lesdits pignons extérieurs (31) font saillie à l'extérieur d'une plaque respective des plaques latérales (11).

5. Dispositif de préhension extensible (1) selon la revendication 4, dans lequel ladite seconde unité de transmission comprend des premiers pignons internes (32) clavetés chacun sur un même premier arbre (33) le long duquel est contraint un pignon respectif desdits premiers pignons externes (31), où chacun desdits premiers arbres (33) est relié en rotation en passant à travers une plaque respective desdites plaques latérales (11), de manière à s'étendre de chaque côté de cette plaque respective desdites plaques latérales (11) et à supporter d'un côté l'un desdits premiers pignons externes (31) et d'un côté opposé l'un desdits premiers pignons internes (32), où lesdits premiers pignons internes (32) s'engrènent avec une seconde crémaillère inférieure respective (34), comprise dans ladite seconde unité de transmission, où chacune desdites secondes crémaillères inférieures (34) fait saillie extérieurement à partir d'un côté respectif desdits côtés latéraux dudit premier élément de berceau (12).

6. Dispositif de préhension extensible (1) selon la revendication 5, dans lequel lesdites secondes crémaillères inférieures (34) sont positionnées de manière décalée par rapport auxdites premières crémaillères (30), dans lequel lesdites premières crémaillères (30) s'engrènent respectivement entre lesdits premiers pignons extérieurs (31) au niveau d'une partie supérieure desdits premiers pignons extérieurs (31) et lesdites secondes crémaillères inférieures (34) s'engrènent respectivement entre lesdits seconds pignons intérieurs (32) au niveau d'une partie inférieure de ceux-ci.

7. Dispositif de préhension extensible (1) selon la revendication 5, dans lequel ledit second ensemble de transmission comprend deux secondes crémaillères supérieures (35) dont chacune s'étend vers l'extérieur à partir d'une plaque respective desdites plaques latérales (11) et s'engage avec une roue dentée respective des secondes roues dentées externes (36), comprises dans ledit second groupe de transmission, dans lequel chacune desdites secondes roues dentées externes (36) pivote sur l'extérieur d'un côté latéral respectif dudit premier élément de berceau (12) à travers un arbre respectif des seconds arbres (37), dans lequel chacun desdits seconds arbres (37) s'étend à travers un côté latéral respectif dudit premier élément de berceau (12) et supporte sur un côté opposé à celui engagé par lesdits seconds pignons externes (36) une roue dentée respective des secondes roues dentées internes (38).

8. Dispositif de préhension extensible (1) selon la revendication 7, dans lequel chacun desdits seconds pignons internes (38) s'étend intérieurement à partir d'un côté respectif dudit premier élément de berceau (12), dans une position interposée entre des côtés latéraux dudit premier élément de berceau (12) et des côtés latéraux dudit second élément de berceau (13), dans lequel chacun desdits seconds pignons internes (38) s'engage avec une troisième crémaillère respective (39) comprise dans ladite seconde unité de transmission, dans lequel chacune desdites troisièmes crémaillères (39) est reliée extérieurement à un côté latéral dudit second élément de berceau (13).

9. Dispositif de préhension extensible (1) selon les revendications 7 et 8, dans lequel chacune desdites troisièmes crémaillères (39) est positionnée de manière décalée par rapport à une crémaillère respective desdites secondes crémaillères supérieures (35), de sorte que chacune desdites troisièmes crémaillères (39) s'engage avec une partie inférieure d'un pignon respectif desdits seconds pignons intérieurs (38) et chacune desdites secondes crémaillères supérieures (35) s'engage avec une partie supérieure d'un pignon respectif desdits seconds pignons extérieurs (36).

10. Dispositif de préhension extensible (1) selon l'une quelconque des revendications précédentes, comprenant au moins un capteur de position linéaire (43) relié de manière fonctionnelle audit élément transversal (9) et à au moins l'une desdites plaques latérales (11) pour détecter une position relative desdites plaques latérales (11) par rapport audit élément transversal (9), dans lequel, ledit au moins un capteur de position linéaire (43) est relié de manière fonctionnelle à ladite au moins une unité de commande logique (26) ou comprend un capteur rotatif indirect relié de manière fonctionnelle à ladite unité de commande logique (26) et, par l'intermédiaire d'un codeur, à ladite unité motrice (25).

11. Dispositif de préhension extensible (1) selon l'une quelconque des revendications précédentes, dans lequel lesdits organes de préhension (5) sont reliés audit second élément de berceau (13) par l'intermédiaire d'un rail (40), relié à une partie inférieure dudit second élément de berceau (13) et d'un chariot (41) qui s'engage en coulissement avec ledit rail (40), le long d'une direction parallèle à ladite direction de préhension (7), ledit dispositif de préhension extensible (1) comprenant des organes d'actionnement (42) reliés audit second élément de berceau (13) et audit chariot (41) pour déplacer sélectivement ledit chariot (41) entre une position rétractée et une position extraite par rapport audit second élément de berceau (13).
